(19) **Europäisches Patentamt / European Patent Office / Office européen des brevets**

(11) **EP 4 775 478 A1**

(12) # EUROPÄISCHE PATENTANMELDUNG

(43) Veröffentlichungstag:
**15.07.2026 Patentblatt 2026/29**

(21) Anmeldenummer: **26150810.5**

(22) Anmeldetag: **08.01.2026**

(51) Internationale Patentklassifikation (IPC):
**B62K 23/04** (2006.01)   **B60L 15/20** (2006.01)
**B62M 7/00** (2010.01)   **B62M 25/08** (2006.01)

(52) Gemeinsame Patentklassifikation (CPC):
**B62M 25/08; B60L 15/2054; B62K 23/04;**
**B62M 7/00;** B60L 2200/12; B60L 2240/48;
B60L 2240/50

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **08.01.2025 AT 500032025**

(71) Anmelder:
• **Wörmer, Leon**
  **5621 St. Veit im Pongau (AT)**

• **Klausner, Thomas**
  **5621 St. Veit im Pongau (AT)**

(72) Erfinder:
• **Wörmer, Leon**
  **5621 St. Veit im Pongau (AT)**
• **Klausner, Thomas**
  **5621 St. Veit im Pongau (AT)**

(74) Vertreter: **Hübscher & Partner Patentanwälte GmbH**
**Spittelwiese 4**
**4020 Linz (AT)**

(54) **VERFAHREN ZUR VORGABE DER ANTRIEBSLEISTUNG EINES ELEKTRISCHEN MOTORRADS**

(57)  Es wird ein Verfahren zur Vorgabe der Antriebsleistung eines elektrischen Motorrads beschrieben, wobei ein Gassignalpegel ($P_{Gas}(t)$) eines Gashebels über eine Steuereinheit abgefragt und modifiziert als Steuersignalpegel ($S_{el}(t)$) an einen elektrischen Antriebsmotor übertragen wird und wobei der Steuersignalpegel ($S_{el}(t)$) in der Steuereinheit in Abhängigkeit eines Kupplungspegels ($P_{Kup}(t)$) eines einen Kupplungshebel simulierenden Kupplungsschalters festgelegt wird. Um vorteilhafte Ansteuerverhältnisse zu schaffen, wird vorgeschlagen, dass zunächst für den Gassignalpegel ($P_{Gas}(t)$) ein den Gassignalpegelverlauf berücksichtigender Glättwert ($Gw(t)$) berechnet wird, und dass der Steuersignalpegel ($S_{el}(t)$) aus dem mit dem Kupplungspegel ($P_{Kup}(t)$) multiplizierten Glättwert ($Gw(t)$) berechnet wird.

EP 4 775 478 A1

**Beschreibung**

Die Erfindung bezieht sich auf ein Verfahren zur Vorgabe der Antriebsleistung eines elektrischen Motorrads, wobei ein Gassignalpegel eines Gashebels über eine Steuereinheit abgefragt und modifiziert als Steuersignalpegel an einen elektrischen Antriebsmotor übertragen wird und wobei der Steuersignalpegel in der Steuereinheit in Abhängigkeit eines Kupplungspegels eines einen Kupplungshebel simulierenden Kupplungsschalters festgelegt wird.

Die Elektrifizierung von Motorrädern birgt das inhärente Problem, dass das Ansprechverhalten eines Elektromotors sich stark von dem eines Verbrennungsmotors unterscheidet, was zu ungewohntem Fahrzeugverhalten und dadurch wiederum zu gefährlichen Verkehrssituationen führen kann. Um das Ansprechverhalten eines manuellen Schaltgetriebes bei einem elektrischen Motorrad zu simulieren, wird beispielsweise in der WO2024039812A1 vorgeschlagen, dass der Gassignalpegel eines Gashebels bei Betätigung eines einen Kupplungshebel simulierenden Kupplungsschalter auf der linken Seite des Lenkers in einer Steuereinheit reduziert wird. Nachteilig an diesem Stand der Technik ist, dass trotz einer Simulation eines Schaltgetriebes das Ansprechverhalten eines Elektromotors sich deutlich von dem eines Verbrennungsmotors unterscheidet, sodass ein Unfallrisiko durch Fehleinschätzung des Fahrzeugverhaltens verbleibt.

Der Erfindung liegt somit die Aufgabe zugrunde, die Fahrsicherheit eines elektrischen Motorrads zu erhöhen, indem dessen Ansprechverhalten an das Ansprechverhalten eines Motorrads mit Verbrennungsmotor angepasst wird.

Die Erfindung löst die gestellte Aufgabe dadurch, dass zunächst für den Gassignalpegel ($P_{Gas}(t)$) ein den Gassignalpegelverlauf berücksichtigender Glättwert ($Gw(t)$) berechnet wird, und dass der Steuersignalpegel ($S_{el}(t)$) aus dem mit dem Kupplungspegel ($P_{Kup}(t)$) multiplizierten Glättwert ($Gw(t)$) berechnet wird. Der Erfindung liegt die Erkenntnis zugrunde, dass für eine realitätstreue Imitation des Ansprechverhaltens eines Verbrennungsmotor einerseits der fahrzeugtypische Drehmomentverlauf in Abhängigkeit des Gassignalpegels und andererseits das Ansprechverhalten bei Betätigung des Kupplungshebels simuliert werden muss. Hierfür sieht das erfindungsgemäße Verfahren einerseits die Berechnung eines Glättwerts aus sowohl dem aktuellen als auch aus vergangenen Gassignalpegeln und andererseits einen mittels Kupplungsschalter festgelegten Kupplungspegel mit einem Wert von 0-1 vor, mit dem der Glättwert multipliziert wird. Zufolge dieser Maßnahmen wird dem Benutzer durch Betätigung des Gashebels und des Kupplungsschalters eine Steuermöglichkeit für das elektrische Motorrad gegeben, die dem eines Motorrads mit Verbrennungsmotor entspricht. Beispielsweise kann ein Benutzer durch Betätigung des Gashebels ohne Betätigung des Kupplungsschalters eine kontinuierlich ansteigende Motorleistung abrufen. Eine Betätigung des Gashebels bei gedrücktem Kupplungsschalter führt hingegen vorerst zu keiner Erhöhung der Motorleistung, sondern lediglich zu einer Erhöhung des den Gassignalpegelverlauf berücksichtigenden Glättwerts. Ein Lösen des Kupplungsschalters bei bereits lange betätigtem Gashebel und somit hohem Glättwert ermöglicht einen abrupten Anstieg der Motorleistung, was einem Einkuppeln eines Verbrennungsmotor bei zuvor erhöhter Kraftstoffzufuhr entspricht. Der Gassignal- und der Kupplungspegel können dabei anhand eines Positionssensors im Gashebel und im Kupplungsschalter an die Steuereinheit übermittelt werden. Durch die Berechnung des Glättwerts für den Gassignalpegel unter Berücksichtigung des Gassignalpegelverlaufs werden abrupte Änderungen am Gashebel geglättet und es wird eine Verzögerung der Motorleistung bei Betätigung des Gashebels erreicht.

Um das Steuersignal mit geringem Regelungsaufwand und trotzdem hoher Imitationstreue eines Verbrennungsmotors zu berechnen, wird vorgeschlagen, dass sich der Glättwert unter Vorgabe eines Glättungsfaktors nach der Formel:

$$Gw(t) = GF * P_{gas}(t) + (1 - GF) * Gw(t - \Delta t)$$

berechnet. Wobei

$Gw(t)$     dem Glättwert im aktuellen Zeitpunkt $t$,
$GF$     dem Glättungsfaktor,
$P_{gas}(t)$     dem Gassignalpegel im aktuellen Zeitpunkt $t$ und
$Gw(t - \Delta t)$     dem Glättwert im vorangegangenen Zeitpunkt $t$-$\Delta t$ entspricht.

Zufolge dieser Merkmale wird für jeden Zeitschritt ein Glättwert berechnet, der sich aus einer gewichteten Summe aus dem vorangehenden Glättwert und dem Gassignalpegel ergibt, sodass auf iterative Weise der Gassignalpegelverlauf berücksichtigt werden kann. Der Einfluss des aktuellen Gassignalpegels auf den neu berechneten Glättwert kann durch die Wahl des Glättungsfaktors erhöht oder gesenkt werden, sodass die Verzögerungszeit zwischen Betätigung des Gashebels und der Erhöhung der Motorleistung verkürzt oder verlängert werden kann. Ein hoher Glättungsfaktor kann dementsprechend das Ansprechverhalten eines Motorrades mit Verbrennungsmotor simulieren, welcher die Motorleistung mit geringer Verzögerungszeit nach Betätigung des Gashebels erhöht. Je nach gewünschtem Ansprechverhalten kann ein beliebiger Glättungsfaktor zwischen 0 und 1 ausgewählt werden, sodass verschiedene Motorradtypen imitiert werden können.

Um ein Ansprechverhalten des elektrischen Motorrads zu erreichen, welches dem eines Motorrads mit Verbrennungsmotor besonders gut entspricht, wird vorgeschlagen, dass der Glättungsfaktor zwischen 0,1 und 0,7 liegt. Dadurch kann einerseits der Gassignalpegelverlauf zuverlässig geglättet werden, während gleichzeitig ein ausreichend schnelles Ansprechen des elektrischen Antriebsmotors auf die Betätigung des Gashebels erreicht wird. Bevorzugt kann der Glättungsfaktor zwischen 0,2 und 0,6 liegen, noch bevorzugter zwischen 0,3 und 0,5.

Die für Verbrennungsmotoren charakteristische Verzögerung des Motorleistungsanstiegs bei Betätigung des Gashebels kann dadurch verbessert simuliert werden, dass der Abstand zwischen den Berechnungen von Glättwert und Steuersignalpegel einem Totzeitglied entspricht. In einer bevorzugten Ausführungsform beträgt der Abstand zwischen den Berechnungen von Glättwert und Steuersignalpegel 10 bis 20 Millisekunden.

Um das Ansprechverhalten eines elektrischen Motorrads noch besser an das eines Motorrads mit Verbrennungsmotor anzupassen, wird vorgeschlagen, dass in einer Simulationseinheit sowohl ein dem elektrischen Antriebsmotor zugeordneter Drehmomentverlauf als auch ein Drehmomentverlauf einer fahrzeugtypischen Verbrennungskraftmaschine hinterlegt ist, dass die Simulationseinheit in Abhängigkeit eines Gassignalpegel sowohl ein zugeordnetes Drehmoment der typischen Verbrennungskraftmaschine als auch ein zugeordnetes Drehmoment des elektrischen Antriebsmotors aus einem Speicher ausliest und dass an die Steuereinheit ein modifizierter Simulationspegel übertragen wird, der dem Drehmoment der typischen Verbrennungskraftmaschine entspricht und der in die Berechnung des Glättwerts einfließt.

Die Erfindung bezieht sich auch auf eine Vorrichtung zur Regelung der Antriebsleistung eines elektrischen Motorrads, umfassend eine ein Gassignal eines Gashebels an einen Elektromotor übertragende Steuereinheit und einen Kupplungsschalter zur Modulierung des Gassignals in Abhängigkeit eines Schaltsignals einer Kupplungsschalterstellung, wobei die Steuereinheit eine nach dem erfindungsgemäßen Verfahren arbeitende Logik aufweist. Um auch bei bereits vollständig gefertigten elektrischen Motorrädern eine Vorgabe der Antriebsleistung, die der eines Motorrads mit Verbrennungsmotor entspricht, zu ermöglichen, wird vorgeschlagen, dass die Steuereinheit in einem Gehäuse angeordnet ist, das gemeinsam mit dem Kupplungsschalter zur Nachrüstung von elektrischen Motorrädern vorgesehen ist, wobei die Steuereinheit in der Gasleitung angeordnet ist. Dadurch kann ein Nachrüstset für bestehende elektrische Motorräder bereitgestellt werden, welches zur Nachrüstung nur in die Gasleitung eingegliedert werden muss. Der Kupplungsschalter kann dabei am Motorradlenker angebracht werden. Das Gehäuse für die Steuereinheit kann wahlweise am Lenker oder am Fahrzeugrumpf montiert sein. Die Steuereinheit kann vorzugsweise eine optische, taktile und/oder auditive Ausgabeeinheit umfassen, welche den Glättwert ausgibt. Beispielsweise kann in Abhängigkeit der Höhe des Glättwerts ein Audiosignal, welches die Motorgeräusche eines Verbrennungsmotors imitiert, und ein Vibrationssignal von der Ausgabeeinheit ausgegeben werden.

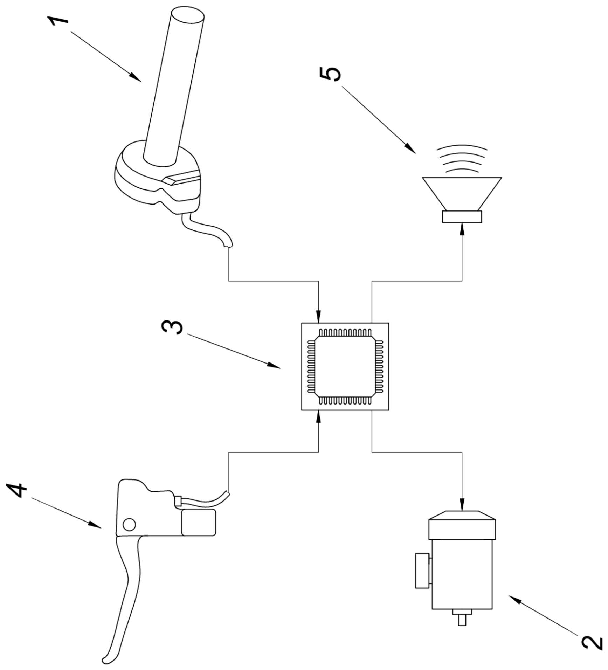

In der Zeichnung ist die Erfindung anhand eines Schaltschemas dargestellt.

Die Vorrichtung zur Vorgabe der Antriebsleistung eines elektrischen Motorrads, umfasst eine ein Gassignal eines Gashebels 1 an einen Elektromotor 2 übertragende Steuereinheit 3 und einen Kupplungsschalter 4 zur Modulierung des Gassignals in Abhängigkeit eines Schaltsignals einer Kupplungsschalterstellung. Die Steuereinheit 3 ist mit einer erfindungsgemäßen Logik ausgestattet. Die Steuereinheit 3 ist in einem Gehäuse angeordnet, das gemeinsam mit dem Kupplungsschalter 4 zur Nachrüstung von elektrischen Motorrädern vorgesehen ist, wobei die Steuereinheit in der Gasleitung angeordnet ist. Zur Hörbarmachung des eingestellten Gaspegels kann eine Ausgabeeinheit 5, beispielsweise ein Lautsprecher, vorgesehen sein. Alternativ oder zusätzlich zu einem Lautsprecher kann zur Imitation eines Verbrennungsmotors auch ein Vibrationsaktuator als Ausgabeeinheit 5 vorgesehen sein.

Die Logik umfasst ein Verfahren zur Vorgabe der Antriebsleistung eines elektrischen Motorrads, wobei ein Gassignalpegel ($P_{Gas}(t)$) eines Gashebels über eine Steuereinheit abgefragt und modifiziert als Steuersignalpegel ($S_{el}(t)$) an einen elektrischen Antriebsmotor übertragen wird und wobei der Steuersignalpegel ($S_{el}(t)$) in der Steuereinheit in Abhängigkeit eines Kupplungspegels ($P_{Kup}(t)$) eines einen Kupplungshebel simulierenden Kupplungsschalters festgelegt wird. Zunächst wird für den Gassignalpegel ($P_{Gas}(t)$) ein den Gassignalpegelverlauf berücksichtigender Glättwert ($Gw(t)$) berechnet, wonach der Steuersignalpegel ($S_{el}(t)$) aus dem mit dem Kupplungspegel ($P_{Kup}(t)$) multiplizierten Glättwert ($Gw(t)$) berechnet wird. Demzufolge kann der Steuersignalpegel ($S_{el}(t)$) nach der Formel

$$S_{el}(t) = Gw(t) * P_{Kup}(t)$$

aus dem Kupplungspegel ($P_{Kup}(t)$) und dem Glättwert ($Gw(t)$), welcher zuvor in Abhängigkeit des Gassignalpegel ($P_{Gas}(t)$) bestimmt wurde, berechnet werden.

**Patentansprüche**

1. Verfahren zur Vorgabe der Antriebsleistung eines elektrischen Motorrads, wobei ein Gassignalpegel ($P_{Gas}(t)$) eines Gashebels über eine Steuereinheit abgefragt und modifiziert als Steuersignalpegel ($S_{el}(t)$) an einen elektrischen Antriebsmotor übertragen wird und wobei der Steuersignalpegel ($S_{el}(t)$) in der Steuereinheit in Abhängigkeit eines Kupplungspegels ($P_{Kup}(t)$) eines einen Kupplungshebel simulierenden Kupplungsschalters festgelegt wird, **dadurch gekennzeichnet, dass** zunächst für den Gassignalpegel ($P_{Gas}(t)$) ein den Gassignalpegelverlauf berücksichtigender Glättwert ($Gw(t)$) berechnet wird, und dass der Steuersignalpegel ($S_{el}(t)$) aus dem mit dem Kupplungspegel ($P_{Kup}(t)$) multiplizierten Glättwert ($Gw(t)$) berechnet wird.

2. Verfahren nach Anspruch 1, **dadurch gekennzeichnet, dass** sich der Glättwert ($Gw(t)$) unter Vorgabe eines Glättungsfaktors (GF) nach der Formel: $Gw(t) = GF * P_{gas}(t) + (1 - GF) * Gw(t - \Delta t)$ berechnet, wobei der Abstand ($\Delta t$) zwischen den Berechnungen von Glättwert ($Gw(t)$) und Steuersignalpegel ($Sel(t)$) ist und wobei ($t$) einem aktuellen und ($t - \Delta t$) einem vorangegangenen Zeitpunkt entspricht.

3. Verfahren nach Anspruch 2, **dadurch gekennzeichnet, dass** der Glättungsfaktor (GF) zwischen 0,1 und 0,7 liegt.

4. Verfahren nach Anspruch 2 oder 3, **dadurch gekennzeichnet, dass** der Abstand ($\Delta t$) zwischen den Berechnungen von Glättwert ($Gw(t)$) und Steuersignalpegel ($Sel(t)$) einem Totzeitglied entspricht.

5. Vorrichtung zur Vorgabe der Antriebsleistung eines elektrischen Motorrads, umfassend eine ein Gassignal eines Gashebels (1) an einen Elektromotor (2) übertragende Steuereinheit (3) und einen Kupplungsschalter (4) zur Modulierung des Gassignals in Abhängigkeit eines Schaltsignals einer Kupplungsschalterstellung, wobei die Steuereinheit eine nach einem Verfahren der Ansprüche 1 bis 4 arbeitende Logik aufweist, **dadurch gekennzeichnet, dass** die Steuereinheit (3) in einem Gehäuse angeordnet ist, das gemeinsam mit dem Kupplungsschalter (4) zur Nachrüstung von elektrischen Motorrädern vorgesehen ist, wobei die Steuereinheit (3) in der Gasleitung angeordnet ist.

Europäisches
Patentamt

European
Patent Office

Office européen
des brevets

# EUROPÄISCHER RECHERCHENBERICHT

Nummer der Anmeldung

EP 26 15 0810

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | US 2023/173929 A1 (LIAO WEI-XIANG [TW] ET AL) 8. Juni 2023 (2023-06-08)<br>* Absätze [0032] - [0034]; Abbildungen 4,5 *<br>----- | 1,5<br>2-4 | INV.<br>B62K23/04<br>B60L15/20<br>B62M7/00<br>B62M25/08 |
| A | WO 2024/039812 A1 (ZERO MOTORCYCLES INC [US]) 22. Februar 2024 (2024-02-22)<br>* Absatz [0041] - Absatz [0044]; Abbildungen 1,3a *<br>----- | 1-5 | |
| A | US 2023/406116 A1 (LIAO WEI-XIANG [TW]) 21. Dezember 2023 (2023-12-21)<br>* Seite 1 - Seite 2; Abbildung 3 *<br>----- | 1-5 | |

RECHERCHIERTE
SACHGEBIETE (IPC)

B62K
B60L
B62M

Der vorliegende Recherchenbericht wurde für alle Patentansprüche erstellt

| Recherchenort | Abschlußdatum der Recherche | Prüfer |
|---|---|---|
| Den Haag | 11. Mai 2026 | Huber, Florian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 26 15 0810

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-05-2026

| Im Recherchenbericht angeführtes Patentdokument | Datum der Veröffentlichung | Mitglied(er) der Patentfamilie | | Datum der Veröffentlichung |
|---|---|---|---|---|
| US 2023173929 A1 | 08-06-2023 | CN | 116241649 A | 09-06-2023 |
| | | TW | 202323701 A | 16-06-2023 |
| | | US | 2023173929 A1 | 08-06-2023 |
| WO 2024039812 A1 | 22-02-2024 | CN | 120091928 A | 03-06-2025 |
| | | EP | 4572971 A1 | 25-06-2025 |
| | | US | 2024059368 A1 | 22-02-2024 |
| | | WO | 2024039812 A1 | 22-02-2024 |
| US 2023406116 A1 | 21-12-2023 | TW | 202400450 A | 01-01-2024 |
| | | US | 2023406116 A1 | 21-12-2023 |

Für nähere Einzelheiten zu diesem Anhang : siehe Amtsblatt des Europäischen Patentamts, Nr.12/82

**EP 4 775 478 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2024039812 A1